## Europäisches Patentamt

## European Patent Office

## Office européen des brevets

(19)

(11) Veröffentlichungsnummer: **0 070 836**
**B1**

---

(12) **EUROPÄISCHE PATENTSCHRIFT**

---

(51) Int. Cl.⁴: **F 16 H 45/02, B 60 K 41/22**

(45) Veröffentlichungstag der Patentschrift:
**17.04.85**

(21) Anmeldenummer: **81903119.6**

(22) Anmeldetag: **20.11.81**

(86) Internationale Anmeldenummer:
**PCT/DE 81/00202**

(87) Internationale Veröffentlichungsnummer:
**WO 82/02753 (19.08.82 Gazette 82/20)**

---

(54) **VORRICHTUNG ZUM STEUERN EINER WANDLER-ÜBERBRÜCKUNGSKUPPLUNG.**

---

(30) Priorität: **07.02.81 DE 3104299**

(43) Veröffentlichungstag der Anmeldung:
**09.02.83 Patentblatt 83/6**

(45) Bekanntmachung des Hinweises auf die Patenterteilung:
**17.04.85 Patentblatt 85/16**

(84) Benannte Vertragsstaaten:
**DE FR GB**

(56) Entgegenhaltungen:
**FR - A - 2 323 065**
**GB - A - 1 536 657**
**GB - A - 2 017 840**
**US - A - 4 148 231**

(73) Patentinhaber: **ROBERT BOSCH GMBH, Postfach 50, D-7000 Stuttgart 1 (DE)**

(72) Erfinder: **Schwab, Erich, Hailstattweg 1, D-7016 Gerlingen (DE)**
Erfinder: **STROH, Walter, Winterweg 7, D-7121 Cleebronn (DE)**

---

BUNDESDRUCKEREI BERLIN

**Beschreibung**

Die Erfindung geht aus von einer Vorrichtung nach der Gattung des Hauptanspruchs.

Automatisch schaltbare Stufengetriebe von Kraftfahrzeugen umfassen üblicherweise einen zwischen dem Motorausgang und dem Getriebeeingang angeordneten hydrodynamischen Drehmomentwandler. Das Getriebe an sich weist entsprechend dem eingeschalteten Gang ein starres Drehzahlverhältnis auf, der Wandler ermöglicht jedoch für eine bestimmte Zeit während eines Gangwechsels ein variables Drehzahlverhältnis durch den im Wandler auftretenden Schlupf zwischen Antriebsseite (Pumpe) und Abtriebsseite (Turbine). Eine derartige Vorrichtung ist beispielsweise aus der DE-A-2 539 147 bekannt.

Bei dieser bekannten Vorrichtung wird eine Wandlerüberbrückungskupplung dann geschlossen, wenn das Verhältnis von Turbinendrehzahl zur Pumpendrehzahl einen vorgegebenen oberen Wert, entsprechend einem vorgegebenen Schlupfwert, erreicht hat. Die Wandlerüberbrückungskupplung wird demgegenüber geöffnet, wenn die Turbinendrehzahl — bei geschlossener Wandlerüberbrückungskupplung gleich der Pumpendrehzahl — einen vorgegebenen unteren Wert unterschritten hat. Dieses Kriterium für das Öffnen der Wandlerüberbrückungskupplung ist deshalb anwendbar, weil in der bekannten Vorrichtung die Wandlerüberbrückungskupplung nur dann eingeschaltet (geschlossen) wird, wenn der höchste Gang eingelegt wird und nur dann wieder geöffnet wird, wenn die Antriebsdrehzahl unter einen vorbestimmten Wert im höchsten Gang absinkt.

Nachteil der bekannten Vorrichtung ist, daß eine Verwendung der Wandlerüberbrückungskupplung in den anderen Gängen, insbesondere beim Umschalten innerhalb der niedrigeren Gänge, nicht möglich ist.

Weiterhin sind aus der GB-A-1 536 657 sowie der US-A-4 148 231 Vorrichtungen zur Getriebesteuerung bekannt, in denen in allgemeiner Form die Bedienung einer Überbrückungskupplung unter anderem in Funktion der Motordrehzahl beschrieben ist. Dieser bekannte Stand der Technik gibt jedoch dem Fachmann keinerlei Hinweise, zu welchem exakten Zeitpunkt die Wandlerüberbrückungskupplung geöffnet werden soll, noch sind Hinweise zu entnehmen, daß durch den Zeitpunkt der Öffnung der Wandlerüberbrückungskupplung die Schaltqualität verbessert werden soll.

Der Erfindung liegt die Aufgabe zugrunde, die Schaltqualität bei Hochschaltvorgängen zu verbessern, insbesondere negative Einwirkungen durch die notwendige Betätigung der Wandlerüberbrückungskupplung auf die Schaltqualität zu mindern und nach Möglichkeit zu vermeiden.

Die erfindungsgemäße Vorrichtung mit den kennzeichnenden Merkmalen des Hauptanspruchs löst diese Aufgabe auf vorteilhafte Weise, wobei durch die Öffnung der Wandlerüberbrückungskupplung im Freilaufpunkt ein minimaler Ruck und damit eine maximale Schaltqualität erreicht wird. Unter Freilaufpunkt versteht man denjenigen Zeitpunkt, zu dem sich eine kurze Zeit nach dem Schaltbefehl das Übersetzungsverhältnis des Getriebes in Richtung des neu einzulegenden Ganges zu ändern beginnt. Dies macht sich durch einen Abfall der Motordrehzahl bzw. der Getriebeeingangsdrehzahl ab diesem Freilaufpunkt bemerkbar.

Durch die in den Unteransprüchen aufgeführten Maßnahmen sind vorteilhafte Weiterbildungen und Verbesserungen der im Hauptanspruch angegebenen Vorrichtung möglich.

In vorteilhafter Ausgestaltung der Erfindung wird bei Rückschaltvorgängen die Wandlerüberbrückungskupplung zusammen mit dem Rückschaltbefehl geöffnet, so daß sich auch im Falle des Rückschaltens keine Beeinträchtigung der Schaltqualität ergibt.

Ausführungsbeispiele der Erfindung sind in der Zeichnung dargestellt und in der nachfolgenden Beschreibung näher erläutert. Es zeigt

Fig. 1 eine Prinzipdarstellung eines Antriebes mit einer Wandlerüberbrückungskupplung;

Fig. 2 das Blockschaltbild einer ersten Ausführungsform einer erfindungsgemäßen Zeitsteuerung für das Öffnen einer Wandlerüberbrückungskupplung beim Hochschalten;

Fig. 3 das Blockschaltbild einer zweiten Ausführungsform einer erfindungsgemäßen Zeitsteuerung für das Öffnen einer Wandlerüberbrückungskupplung beim Hochschalten;

Fig. 4 das Blockschaltbild einer erfindungsgemäßen Ausführungsform einer Zeitsteuerung für das Öffnen einer Wandlerüberbrückungskupplung beim Rückschalten.

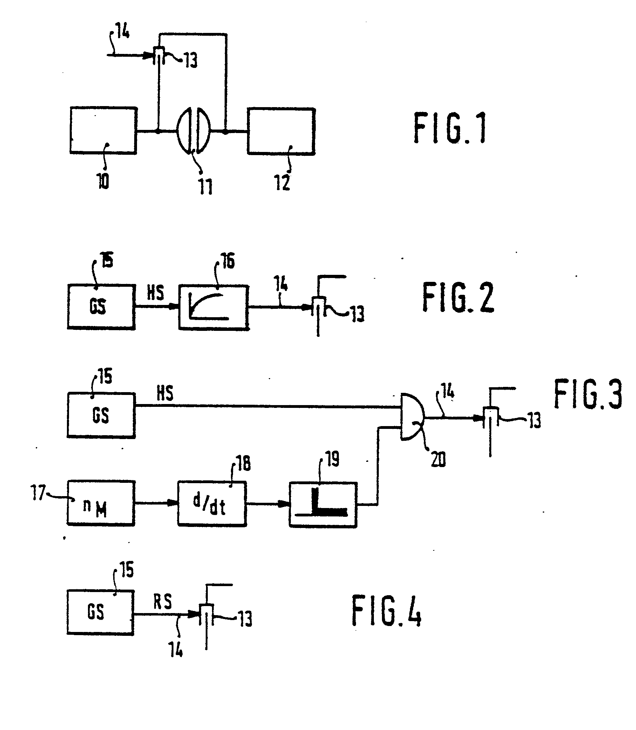

In Fig. 1 ist mit 10 eine Brennkraftmaschine eines Kraftfahrzeuges bezeichnet, an deren Abtriebswelle ein hydrodynamischer Drehmomentwandler 11 angeordnet ist, der die Verbindung zu einem automatischen Stufengetriebe 12 herstellt. Im Wandler 11 treten zwischen dem antriebsseitigen Pumpenrad und dem abtriebsseitigen Turbinenrad Schlupfverluste auf. Diese Schlupfverluste haben einerseits den Vorteil, einen weichen Schaltübergang beim Umschalten des Stufengetriebes 12 zu bewirken, bei einmal eingeschaltetem Gang bewirken die Restverluste im Wandler 11 jedoch einen Energiemehrbedarf, der sich in einem Treibstoffmehrverbrauch bei Antrieben mit automatischem Stufengetriebe und hydrodynamischen Drehmomentwandler bemerkbar macht. Um diesen Verlusten zu begegnen, ist parallel zum Wandler 11 eine Wandlerüberbrückungskupplung 13 angeordnet, die über eine Steuerleitung 14 betätigbar ist. Wird diese Wandlerüberbrückungskupplung 13 geschlossen, besteht eine starre Verbindung zwischen dem Motorausgang und dem Getriebeeingang, es treten daher keine Wandlerverluste mehr auf.

Wie bereits erwähnt, wird die Wandlerüberbrückungskupplung 13 üblicherweise nur dann in Eingriff gebracht, wenn der höchste Gang eingelegt wird. Dies hat jedoch zur Folge, daß keine Treibstoffersparnis im Stadtbetrieb bzw. bei kleinen Geschwindigkeiten erzielt wird, wie sie beispielsweise im CVS-Test gefahren werden. Daher ist es wünschenswert, die Wandlerüberbrückungskupplung auch in den niedrigeren Gängen zuzuschalten. Dies hat jedoch eine hohe Schalthäufigkeit der Wandlerüberbrückungskupplung zur Folge, so daß sich ohne weitere Maßnahmen eine Verminderung der Schaltqualität bei Umschaltungen in den niedrigeren Gängen ergäbe. Es ist nämlich dann erforderlich, die Wandlerüberbrückungskupplung während jedes Schaltvorganges im Getriebe zu steuern, da Schaltungen mit geschlossener Wandlerüberbrückungskupplung wegen der fehlenden Dämpfungswirkung des — dann kurzgeschlossenen — Wandlers komfortmäßig schwer beherrschbar sind. Bei überbrücktem Wandler sind nämlich die Drehmassen des Motors starr mit dem Abtrieb verbunden. Bei starken Änderungen des Motordrehzahlgradienten, wie sie vor allem am Ende von Schaltungen auftreten, werden daher Torsionsschwingungen im Triebstrang angeregt, die den Schaltkomfort erheblich verschlechtern.

Die Wandlerüberbrückungskupplung 13 wird daher über die Steuerleitung 14 während jedes Umschaltvorganges, d. h. auch in den niedrigeren Gängen, geöffnet und in an sich bekannter Weise dann wieder geschlossen, wenn der Schlupf im Wandler 11 einen vorbestimmten Betrag, beispielsweise 0,8 wieder erreicht hat. Die Messung des Schlupfes des Wandlers 11 kann in einfacher Weise durch Erfassen der Pumpen- und Turbinendrehzahl und Verarbeitung dieser Werte vorgenommen werden, wobei die Schlupfschwelle zweckmäßigerweise durch einen Komparator bestimmt wird. Diese Maßnahmen sind jedoch aus dem Stand der Technik bekannt und brauchen daher hier nicht im einzelnen erläutert zu werden.

Um den bei automatischen Stufengetrieben erzielbaren Schaltkomfort auch beim zusätzlichen Einsatz einer Wandlerüberbrückungskupplung möglichst vollständig zu erhalten, wird in weiterer Ausgestaltung der Erfindung eine Zeitsteuerung vorgesehen, die zwischen Hoch- und Rückschaltvorgängen unterscheidet und in Abhängigkeit von diesen Schaltarten eine Zeitsteuerung für das Öffnen der Wandlerüberbrückungskupplung 13 vornimmt.

Hochschaltvorgänge erfolgen hierbei in aller Regel ohne Zugkraftunterbrechung. Während des Schaltvorganges ist eine schleifende Kupplung im Eingriff, wodurch Torsionsschwingungen gedämpft werden. Der kritische Punkt des Schaltvorganges ist dabei das Schaltungsende, wenn die Kupplung zu haften beginnt. Um die hierbei auftretenden starken Schwingungen über den Wandler dämpfen zu können, ist es erforderlich, daß die Wandlerüberbrückungskupplung offen ist, wenn die schleifende Kupplung zu haften beginnt.

Zweckmäßigerweise wird die Wandlerüberbrückungskupplung beim Hochschalten jedoch nicht schon dann geöffnet, wenn der Hochschaltbefehl HS auftritt. Die Einleitung einer Hochschaltung erfolgt nämlich durch Zuschalten einer Kupplung. Die Füllzeiten von Kupplungen sind jedoch wesentlich länger als die Entleerzeiten und variieren in weiten Grenzen, z. B. im Bereich von 100 bis 500 ms, je nach Kupplungsvolumen und Öltemperatur. Würde man daher die Wandlerüberbrückungskupplung beim Hochschalten mit dem Hochschaltbefehl HS öffnen, wäre sie bereits geöffnet, bevor — wegen der längeren Füllzeit der Getriebekupplung — hydraulisch die Hochschaltung beginnt. Das Wirksamwerden des Öffnens der Wandlerüberbrückungskupplung vor Beginn des Hochschaltvorganges würde sich jedoch als Schaltdruck und damit als Minderung der Schaltqualität bemerkbar machen.

In weiterer Ausgestaltung der Erfindung wird daher die Wandlerüberbrückungskupplung erst dann geöffnet, wenn seit dem Auftreten eines Hochschaltvorganges eine vorbestimmte Zeit verstrichen ist.

Hierzu kann eine Zeitsteuerung verwendet werden, wie sie schematisch in Fig. 2 dargestellt ist. Von einer Getriebesteuereinheit 15 wird dann, wenn eine Hochschaltung eingeleitet werden soll, ein Hochschaltbefehl HS abgegeben und über ein Verzögerungsglied 16 auf die Steuerleitung 14 der Wandlerüberbrückungskupplung 13 weitergeleitet. Diese Anordnung hat zur Folge, daß die Wandlerüberbrückungskupplung 13 um eine vorbestimmte Zeit gegenüber dem Hochschaltbefehl HS versetzt geöffnet wird.

Gegenüber dieser starren Zeitsteuerung wird gemäß der Erfindung der Öffnungszeitpunkt der Wandlerüberbrückungskupplung 13 so gesteuert, daß er mit dem Freilaufpunkt des Getriebes zusammenfällt. Dieser Freilaufpunkt macht sich im zeitlichen Verlauf der Motordrehzahl $n_m$ dadurch bemerkbar, daß die Motordrehzahl absinkt.

Hierzu ist in Fig. 3 eine Zeitsteuerung dargestellt, bei der zusätzlich ein Motordrehzahlgeber 17 vorgesehen ist, der über eine Differenzierstufe 18 an einen Komparator 19 angeschlossen ist, dessen Ausgang auf einen Eingang eines UND-Gatters 20 führt, dessen anderer Eingang mit dem Hochschaltsteuerausgang der Getriebesteuereinheit 15 in Wirkungsverbindung steht. Der Ausgang des UND-Gatters 20 ist an die Steuerleitung 14 der Wandlerüberbrückungskupplung 13 angeschlossen. Nimmt die Motordrehzahl ab, wird dies in der Differenzierstufe 18 durch ein negatives Ausgangssignal erkannt, wodurch sich am Ausgang des Komparators 19 durch geeignete Einstellung des Schwellwertes in der Nähe des Nullpunktes ein positives Ausgangssignal einstellt. Koinzidiert dieses mit einem Hochschaltbefehl HS von der Getriebesteuereinheit 15 wird über die Steuerleitung 14 die Wandlerüberbrückungskupplung 13 geöffnet.

Im Gegensatz zu Hochschaltungen erfolgen Rückschaltungen in aller Regel mit Zugkraftunterbrechung. Der für den Schaltkomfort entscheidende Punkt ist dabei das Ende der Schaltung, wenn der Freilauf des neuen Ganges anlegt. Um zu diesem Zeitpunkt Torsionsschwingungen auszugleichen, ist es wiederum erforderlich, daß die Wandlerüberbrückungskupplung geöffnet ist. Die hydraulische Rückschaltung wird durch das Öffnen einer Kupplung eingeleitet, wodurch auch die Zugkraftunterbrechung hervorgerufen wird. Da die Zugkraft auf diese Weise ohnehin unterbrochen ist, ist es möglich, im Falle des Rückschaltens die Wandlerüberbrückungskupplung gleichzeitig mit dem Rückschaltbefehl RS zu öffnen. Dies gilt um so mehr, als die charakteristischen Zeiten für das Öffnen von Kupplungen im allgemeinen nur wenig unterschiedlich sind. Aufgrund dessen fällt das Öffnen der Wandlerüberbrückungskupplung mit dem Beginn der Zugkraftunterbrechung aufgrund des Öffnens der Kupplung im Getriebe zur Einleitung der Rückschaltung zeitlich zusammen. Das Öffnen der Wandlerüberbrückungskupplung macht sich mithin nicht störend beim Umschalten bemerkbar.

Erfindungsgemäß wird daher beim Rückschalten die Wandlerüberbrückungskupplung zeitlich zusammen mit dem Rückschaltbefehl RS geöffnet.

Eine Zeitsteuerung hierzu ist in Fig. 4 dargestellt. Der Rückschaltbefehl-Ausgang der Getriebesteuereinheit 15 ist hierbei direkt mit der Steuerleitung 14 verbunden, so daß ein Auftreten des Rückschaltbefehls RS unmittelbar für ein Öffnen der Wandlerüberbrückungskupplung 13 sorgt.

**Patentansprüche**

1. Vorrichtung zum Steuern einer Wandlerüberbrückungskupplung (13) in einem automatischen Stufengetriebe (12) eines Kraftfahrzeuges, wobei in einer Getriebesteuereinheit (15) Befehle (HS, RS) zum Hoch- und Rückschalten des Stufengetriebes erzeugt werden und Schaltmittel vorgesehen sind, die einmal ein Öffnen der Wandlerüberbrückungskupplung (13) und andererseits ein Schließen der Wandlerüberbrückungskupplung (13) bei Erreichen eines vorgegebenen Schlupfwertes des Wandlers bewirken und schließlich die Wandlerüberbrückungskupplung (13) in Abhängigkeit von den Schaltbefehlen (HS, RS) bei unterschiedlichen Gangwechseln betätigbar ist, dadurch gekennzeichnet, daß bei Hochschaltungen die Wandlerüberbrückungskupplung (13) im Freilaufpunkt des Getriebes geöffnet wird.

2. Vorrichtung nach Anspruch 1, dadurch gekennzeichnet, daß sie aus einer elektronischen Steuervorrichtung besteht, in welcher ein Motordrehzahlgeber (17) über eine Differenzierstufe (18) mit einer Schwellwertstufe (19) verbunden ist und bei Hochschaltungen die Wandlerüberbrückungskupplung (13) bei Auftreten eines Ausgangssignals der Schwellwertstufe (19) geöffnet wird.

3. Vorrichtung nach Anspruch 1 oder 2, dadurch gekennzeichnet, daß bei Rückschaltung die Wandlerüberbrückungskupplung (13) mit dem Rückschaltbefehl (RS) geöffnet wird.

4. Vorrichtung nach einem der vorhergehenden Ansprüche, dadurch gekennzeichnet, daß bei Hochschaltungen die Wandlerüberbrückungskupplung (13) um einen vorgegebenen zeitlichen Betrag gegenüber dem Hochschaltbefehl (HS) versetzt geöffnet wird.

**Claims**

1. Device for controlling a converter lock-up clutch (13) in an automatic multi-step transmission (12) of a motor vehicle, instructions (HS, RS) for shifting the multistep transmission up and down being generated in a transmission control unit (15) and there being shifting means which, on the one hand, cause the opening of the converter lock-up clutch (13) and, on the other hand, the closing of the converter lock-up clutch (13) when a predetermined slip value of the converter is reached, and finally the converter lock-up clutch (13) being actuable as a function of the gear-shift instructions (HS, RS) in different gear changes, characterised in that, when shifting up, the converter lock-up clutch (13) is opened at the freewheel point of the transmission.

2. Device according to Claim 1, characterised in that ist consists of an electronic control device, in which an engine-speed transmitter (17) is connected to a thresholdvalue stage (19) via a differentiating stage (18) and, when shifting up the converter lock-up clutch (13) is opened when an output signal from the threshold-value stage (19) occurs.

3. Device according to Claim 1 or 2, characterised in that, when shifting down, the converter lock-up clutch (13) is opened by means of the down-shift instruction (RS).

4. Device according to one of the preceding claims, characterised in that, when shifting up, the converter lock-up clutch (13) is opened staggered by a predetermined period of time in relation to the up-shift instruction (HS).

**Revendications**

1. Dispositif de commande d'un embrayage substituant un convertisseur (13) dans une boîte de vitesses automatique (12) d'un véhicule automobile, dans lequel une unité de commande de transmission (15) génère des ordres (HS, RS) pour changer de rapport de vitesses montant et changer de rapport de vitesses en retour dans la boîte de vitesses, et qui comporte des moyens de commutation qui assurent d'une part l'ouverture de l'embrayage de substitution de convertisseur (13) et d'autre part une fermeture de l'embrayage de substitution de convertisseur (13) lorsque le convertisseur atteint un glissement prédéterminé et enfin l'embrayage de substitution de convertisseur (13) est susceptible d'être mis en œuvre en fonction des ordres de commutation (HS, RS) pour des changements de rapport de vitesse différents, caractérisé en ce que pour un changement de rapport de vitesses montant, l'embrayage de substitution de convertisseur (13) est ouvert au point de roue libre de la transmission.

2. Dispositif selon la revendication 1, caractérisé en ce qu'il se compose d'un dispositif de commande électronique dans lequel un capteur de vitesses de rotation (17) du moteur est relié par un étage de différentiation (18) à un étage à seuil (19) et lors du changement de rapport de vitesses montant, l'embrayage de substitution de convertisseur (13) est ouvert lors de l'arrivée d'un signal de sortie de l'étage à valeur de seuil (19).

3. Dispositif selon la revendication 1 ou 2, caractérisé en ce que lors du changement de rapport de vitesses en retour, l'embrayage de substitution de convertisseur (13) est ouvert par l'ordre de changement de rapport de vitesses en retour (RS).

4. Dispositif selon l'une des revendications précédentes, charactérisé en ce que lors des changements de rapport de vitesses montants, l'embrayage de substitution de convertisseur (13) est ouvert de façon décalée d'une durée prédéterminée par rapport à l'ordre de changement de rapport de vitesses, montant (HS).

FIG.1

FIG.2

FIG.3

FIG.4